# EUROPEAN PATENT SPECIFICATION

(11) **EP 1 584 826 B1**
(45) Date of publication and mention of the grant of the patent: **21.05.2008**
(21) Application number: 05251736.4
(22) Date of filing: 22.03.2005
(51) Int. Cl.: F16B 37/12

(54) **Threaded insert with knurl**
Gerändelter Gewindeeinsatz
Douille filetée moletée

(30) Priority: 06.04.2004 GB 0407778
(43) Date of publication of application: 12.10.2005
(73) Proprietor: Tappex Thread Inserts Limited, Stratford-on-Avon, Warwickshire CV37 9NT (GB)
(72) Inventor: Barnsdale, Timothy John Roderic, Alcester Warwichshire B49 6HB (GB)
(74) Representative: Moffat, John Andrew

(56) References cited:
- DE-U1- 7 935 646
- US-A- 4 003 287
- US-A- 5 064 323
- US-A1- 2002 102 146

## Description

The present invention relates to fasteners and in particular to fasteners, such as threaded inserts, arranged in use to be self-threaded into a parent material of a workpiece.

Threaded inserts are used to provide a strong wear resistant thread in a weak material such as a thermoplastic.

It is known to provide inserts with an external knurl form around a shank portion thereof. The knurl form is used for installation of the fastener using heat, ultrasonics or simple press fit.

Other fasteners have an external thread that either cuts or thread forms into the weak material. Such fasteners are known as 'self tapping' fasteners and it is to such fasteners that the invention has particular application.

In use, once a threaded insert has been installed in the parent material and a mating component is placed in position, assembly of a threaded fastener, such as a screw or bolt to the threaded insert may commence. Once a clamp condition occurs between a joint formed between the threaded insert and the mating component, as the threaded fastener continues to rotate friction develops along a contact surface between the threaded insert and the threaded fastener. The friction increases as the tensile load in the joint increases.

The threaded insert may fail due to a number of mechanisms. If an air gap exists between the parent material and the threaded insert, the threaded insert may 'jack out'. The threaded fastener may break or the thread formed in the threaded insert may be sheared. Also, the threaded insert may fail due to rotation caused by the threaded insert being partially jacked out and compressing the parent material if the material of the parent material is weaker than the material of the threaded insert thereby destroying the joint. The threaded insert may also fail by rotation where the thread formed by the threaded insert as it is inserted in the parent material becomes stripped and the threaded insert then continues to turn. This means both that no clamp load can then be created but also that it is very difficult to remove the threaded fastener as the threaded insert simply rotates with the parent material.

It is known to reduce this problem by the use of threaded inserts having a headed portion to provide a greater bearing surface to resist compression of the parent material. While this may prevent partial jacking out, known externally threaded inserts still fail due to rotation, in particular if the bearing surfaces of the threaded insert and the threaded fastener are smooth and near frictionless.

Self tapping inserts have the advantage that they are quick to install and provide high pull-out performance as the external thread is almost at right angles to the longitudinal axis of the insert (the angle being determined by the helix angle). The low helix angle creates a low resistance to stripping by rotation.

It is an advantage of the present invention that an insert having improved torque performance is provided for.

One solution is shown in DE 75 35 646 U1 showing a fastener comprising a generally cylindrical body about which is formed a thread, the fastener having a first end and a second end, the first end comprising an upper bearing surface. However, the disclosed fastener shows an angled upper surface in the form of a radial flange provided with ribs on the side of the flange. In use once the fastener has been screwed into a parent material the flange is flattened to be flat with an upper surface of the parent material such that the axial ridges formed by the ribs on the flange bite into the parent material to prevent rotation of the fastener in the parent material.

The present invention proposes a different solution.

According to a first aspect of the present invention a fastener comprising a generally cylindrical body about which is formed a thread, the fastener having a first end and a second end, the first end comprising an upper bearing surface, is characterised in that the upper bearing surface of the fastener is provided with a knurled surface.

Preferably, the knurled surface is provided on the upper bearing surface of a radially outwardly extending flange formed at the first end of the fastener.

Preferably, the knurled surface comprises a radial knurl or a parallel knurl.

Preferably, the knurled surface partially covers the first end of the fastener.

Preferably, the knurled surface is formed in a ring on the first end of the fastener.

Preferably, a leading edge of the external thread is formed with a cutting edge.

Alternatively, the fastener is formed with a plurality of longitudinal flutes equally spaced about a periphery of the generally cylindrical body. More preferably, a leading edge of each portion of the external thread is formed with a cutting edge.

The invention will now be described, by way of example only, with reference to the accompanying drawings, in which:-
Figure 1 shows an end view of a first fastener in accordance with the present invention;
Figure 2 shows a side view, partly in section, of the fastener shown in Figure 1;
Figure 3 shows an end view of a second fastener in accordance with the present invention;
Figure 4 shows a side view, partly in section, of the fastener shown in Figure 3; and
Figure 5 shows a side view, partly in section, of apparatus suitable for performing an application torque test.

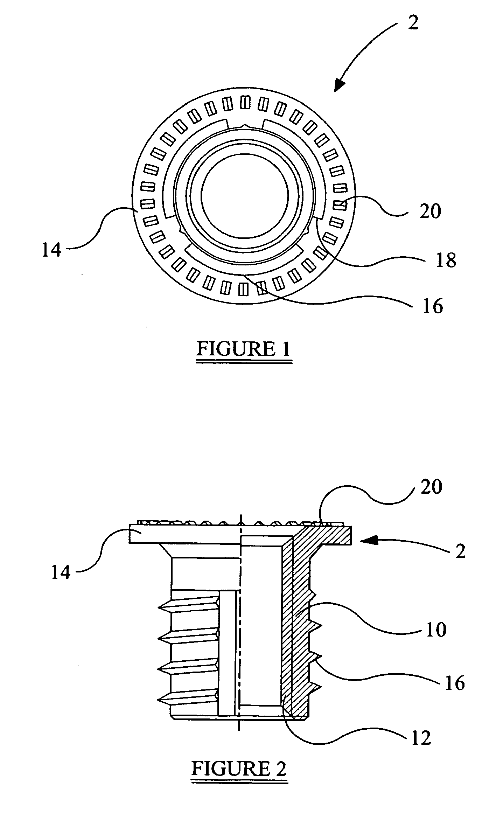

Referring first to Figures 1 and 2 a fastener 2 is shown. The fastener 2 comprises a generally cylindrical body 10 formed with an internal thread 12. In the embodiment illustrated in Figures 1 and 2, the fastener 2 comprises a radially outwardly extending flange 14 at a first end. The fastener 2 may be formed from any suitable material, though may usefully be manufactured from brass or steel. The internal thread 12 is adapted to receive a corresponding thread of a threaded fastener (not shown) in a conventional manner.

In use, the first end of the fastener 2 forms the front bearing face of the fastener 2.

The body 10 of the fastener 2 is provided with an external thread 16. In the illustrated embodiment, the external thread 16 is formed with a set of three longitudinal flutes 18 equally spaced about the periphery of the body 10. Each of the flutes 18 is formed to have a depth substantially equal to the depth of the external thread 16. Advantageously, the leading edge (having regard to the direction of rotation of the fastener 2 during insertion into the parent material) of each portion of the external thread 16 is formed with a cutting edge. The cutting edge assists in cutting of a thread in the parent material in which the fastener 2 is inserted.

The radially outwardly extending flange 14 is provided with a knurled surface 20. In the illustrated embodiment, the knurled surface takes the form of a ring or annulus located centrally on the upper surface of the radially outwardly extending flange 14. By way of example, the knurled surface 20 may be a radial knurl (illustrated) or a parallel knurl. The knurled surface 20 need not cover completely the upper surface of the radially outwardly extending flange 14 to provide improved performance.

By using either a radial knurl or a parallel knurl formed into a ring on the top surface of the fastener 2 that can either completely or partially cover the front bearing face of the fastener 2 improved performance is achieved. As the clamping force increases, the knurl embeds itself, thereby resisting the attempt of the fastener 2 to rotate.

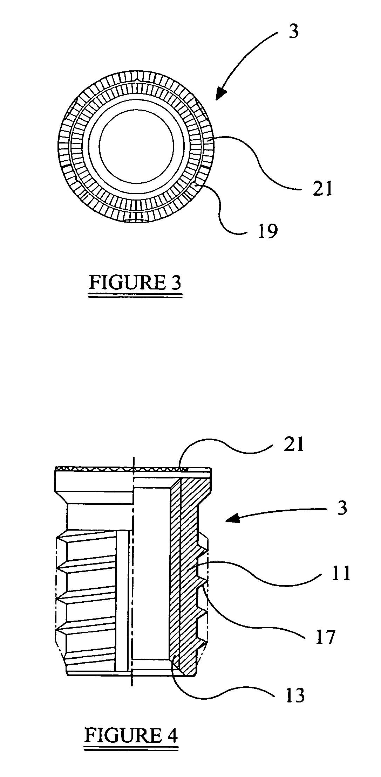

An alternative embodiment of a fastener 3 in accordance with the present invention is shown in Figures 3 and 4.

The fastener 3 comprises a generally cylindrical body 11 formed with an internal thread 13 adapted to receive a corresponding thread of a threaded fastener (not shown) in a conventional manner.

The body 11 of the fastener 3 is provided with an external thread 17. In the illustrated embodiment, the external thread 17 is formed with a set of three longitudinal flutes 19 equally spaced about the periphery of the body 11. Each of the flutes 19 is formed to have a depth substantially equal to the depth of the external thread 17. Advantageously, the leading edge (having regard to the direction of rotation of the fastener 3 during insertion into the parent material) of each portion of the external thread 17 is formed with a cutting edge. The cutting edge assists in cutting of a thread in the parent material in which the fastener 3 is inserted.

In the illustrated embodiment, the knurled surface takes the form of a ring or annulus located centrally on the upper surface of the radially outwardly extending flange 14. By way of example, the knurled surface 20 may be a radial knurl (illustrated) or a parallel knurl. The knurled surface 20 need not cover completely the upper surface of the radially outwardly extending flange 14 to provide improved performance.

The fastener 3 is not necessarily provided with a radially outwardly flange and a knurled surface 21 is instead formed on an end face of the body 11 of the fastener 3.

By using either a radial knurl or a parallel knurl formed into a ring on the top surface of the fastener 2,3 that can either completely or partially cover the front bearing face of the fastener 2,3 improved performance is achieved. As the clamping force increases, the knurl embeds itself, thereby resisting the attempt of the fastener 2,3 to rotate.

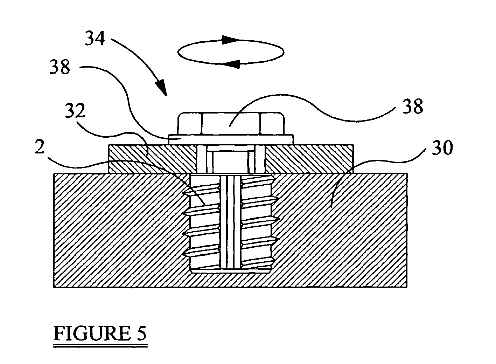

Fasteners of the kind illustrated in Figures 1 and 2 and as illustrated in Figures 3 and 4 were subjected to a number of torque tests. Fasteners of the kind illustrated but without the knurled surface 20 were also subjected to the same torque tests. One such test was an application torque test (Figure 5).
In this test a fastener 2 is located in a parent material 30. A mating component 32 such as a plate is placed adjacent the parent material 30. A threaded fastener 34, such as a screw bolt, is then inserted through an opening in the mating component 32 and into the fastener 2. In Figure 3 a washer 36 has been placed between a headed portion 38 of the threaded fastener 34 and the mating component 32. The threaded fastener 34 is then tightened as indicated by the headed arrows to clamp the mating component 32 to the parent material 30. The threaded fastener 34 is further tightened in increments until a desired loading is achieved or failure occurs. The illustrated fasteners were found to withstand a much greater application of torque than those without the knurled surface 20.

## Claims

1. A fastener (2,3) comprising a generally cylindrical body (10,11) about which is formed a thread (16,17) the fastener having a first end and a second end, the first end comprising an upper bearing surface, **characterised in that** the upper bearing surface of the fastener (2,3) is provided with a knurled surface (20,21).

2. A fastener (2,3) according to claim 1, **characterised in that** the knurled surface (20,21) is provided on the upper bearing surface of a radially outwardly extending flange (14) formed at the first end of the fastener (2,3).

3. A fastener (2,3) according to claim 1 or claim 2, **characterised in that** the knurled surface (20,21) comprises a radial knurl or a parallel knurl.

4. A fastener (2,3) according to any previous claim, **characterised in that** the knurled surface (20,21) partially covers the upper bearing surface of the fastener (2,3).

5. A fastener (2,3) according to any previous claim, **characterised in that** the knurled surface (20,21) is formed in a ring on the upper bearing surface of the fastener (2,3).

6. A fastener (2,3) according to claim 1, **characterised in that** a leading edge of the external thread (16,17) is formed with a cutting edge.

7. A fastener (2,3) according to any of claims 1 to 5, **characterised in that** the fastener (2,3) is formed with a plurality of longitudinal flutes (18,19) equally spaced about a periphery of the generally cylindrical body (10,11).

8. A fastener (2,3) accordingly to claim 7, **characterised in that** a leading edge of each portion of the external thread (16,17) is formed with a cutting edge.

## Patentansprüche

1. Befestigungselement (2, 3), das einen im Allgemeinen zylindrischen Körper (10, 11) umfasst, um den ein Gewinde (16, 17) geformt ist, wobei das Befestigungselement ein erstes Ende und ein zweites Ende hat, wobei das erste Ende eine obere Lagerfläche umfasst, **dadurch gekennzeichnet, dass** die obere Lagerfläche des Befestigungselements (2, 3) mit einer gerändelten Oberfläche (20, 21) versehen ist.

2. Befestigungselement (2, 3) nach Anspruch 1, **dadurch gekennzeichnet, dass** die gerändelte Oberfläche (20, 21) auf der oberen Lagerfläche einen sich in Radialrichtung nach außen erstreckenden Flanschs (14) bereitgestellt wird, der am ersten Ende des Befestigungselements (2, 3) geformt ist.

3. Befestigungselement (2, 3) nach Anspruch 1 oder Anspruch 2, **dadurch gekennzeichnet, dass** die gerändelte Oberfläche (20, 21) eine radiale Rändelung oder eine parallele Rändelung umfasst.

4. Befestigungselement (2, 3) nach einem der vorhergehenden Ansprüche, **dadurch gekennzeichnet, dass** die gerändelte Oberfläche (20, 21) teilweise die obere Lagerfläche des Befestigungselements (2, 3) bedeckt.

5. Befestigungselement (2, 3) nach einem der vorhergehenden Ansprüche, **dadurch gekennzeichnet, dass** die gerändelte Oberfläche (20, 21) in einem Ring auf der oberen Lagerfläche des Befestigungselements (2, 3) geformt ist.

6. Befestigungselement (2, 3) nach Anspruch 1, **dadurch gekennzeichnet, dass** eine Vorderkante des Außengewindes (16, 17) mit einer Schneidkante geformt ist.

7. Befestigungselement (2, 3) nach einem der Ansprüche 1 bis 5, **dadurch gekennzeichnet, dass** das Befestigungselement (2, 3) mit mehreren Längsnuten (18, 19) geformt ist, die mit gleichem Zwischenraum um einen Umfang des im Allgemeinen zylindrischen Körpers (10, 11) angeordnet sind.

8. Befestigungselement (2, 3) nach Anspruch 7, **dadurch gekennzeichnet, dass** eine Vorderkante jedes Abschnitts des Außengewindes (16, 17) mit einer Schneidkante geformt ist.

## Revendications

1. Elément de fixation (2, 3), comprenant un corps généralement cylindrique (10, 11) autour duquel est formé un filetage (16, 17), l'élément de fixation comportant une première extrémité et une deuxième extrémité, la première extrémité comprenant une surface de support supérieure, **caractérisé en ce que** la surface de support supérieure de l'élément de fixation (2, 3) comporte une surface moletée (20, 21).

2. Elément de fixation (2, 3) selon la revendication 1, **caractérisé en ce que** la surface moletée (20, 21) est agencée sur la surface de support supérieure d'une bride s'étendant radialement vers l'extérieur (14) formée au niveau de la première extrémité de l'élément de fixation (2,3).

3. Elément de fixation (2, 3) selon les revendications 1 ou 2, **caractérisé en ce que** la surface moletée (20,21) comprend un moletage radial ou un moletage parallèle.

4. Elément de fixation (2, 3) selon l'une quelconque des revendications précédentes, **caractérisé en ce que** la surface moletée (20, 21) recouvre partiellement la surface de support supérieure de l'élément de fixation (2, 3).

5. Elément de fixation (2, 3) selon l'une quelconque des revendications précédentes, **caractérisé en ce que** la surface moletée (20, 21) est formée dans un anneau sur la surface de support supérieure de l'élément de fixation (2, 3).

6. Elément de fixation (2, 3) selon la revendication 1, **caractérisé en ce qu'**un bord avant du filetage externe (16, 17) comporte une arête de coupe.

7. Elément de fixation (2, 3) selon l'une quelconque des revendications 1 à 5, **caractérisé en ce que** l'élément de fixation (2, 3) comporte plusieurs cannelures longitudinales (18, 19) espacées de manière égale autour d'une périphérie du corps généralement cylindrique (10, 11).

8. Elément de fixation (2, 3) selon la revendication 7, **caractérisé en ce qu'**un bord avant de chaque partie du filetage externe (16, 17) comporte une arête de coupe.
